# EUROPEAN PATENT APPLICATION

(11) **EP 2 278 459 A1**
(43) Date of publication of application: **26.01.2011**
(21) Application number: 09008860.0
(22) Date of filing: 07.07.2009
(51) Int. Cl.: G06F 9/445

(54) **Faster computer boot method**

(71) Applicant: Giga-Byte Technology Co., Ltd., Hsin-Tien Taipei-Hsien (TW)
(72) Inventor: Lin, Hou-Yuan, Taipei Hsien (TW); Chen, Chen-Shun, Taipei Hsien (TW)
(74) Representative: Brandenburger, Karin

(57) **Abstract**

A method for operation system startup includes steps of switching on hardware startup; determining whether there is a trigger signal; reading an initial parameter from a storage device, and loading the initial parameter into a startup program when there is no trigger signal, executing the startup program; and entering operational system.

## Description

### BACKGROUND

### 1. Field of the invention

The present invention relates to a method for operation system startup.

### 2. Description of the Related Art

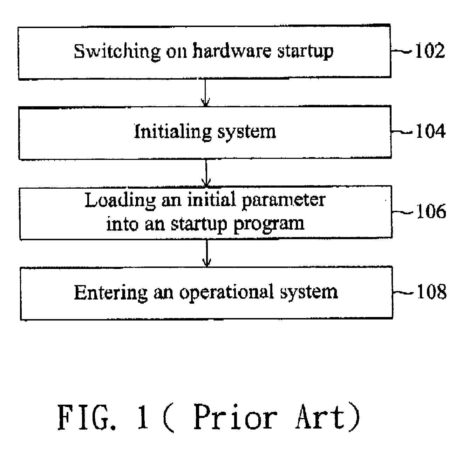

FIG. 1 is a flow chart of a conventional computer operation system startup. After a hardware startup and before entering the operation system, startup steps, such as system initialization, and loading an initial parameter to a startup program, are executed. Firstly, in step 102, when power supply and timing sequence of hardware, such as CPU or peripheral chips, is confirmed, the hardware startup is accomplished. Next, in step 104, system reads BIOS startup program, and executes system initialization, including system configuration analysis and hardware check, or user entering into BIOS to execute settings. Such as analyzing model number of CPU, size of memory and model number of hard disk, and checking whether there is a peripheral display, a keyboard, a hard disk, or etc., and executing basic settings. After accomplishing the foregoing steps, a set value of the system is changed, that is, a new initial parameter is generated. Hereafter, in step 106, the core of the system loads the initial parameter to the startup program, and finally, in step 108, entering operational system.

### BRIEF SUMMARY

The present invention provides a method for operation system startup. The method includes steps of: switching on hardware startup; determining whether there is a trigger signal; reading an initial parameter from a storage device, and loading the initial parameter into a startup program when there is no trigger signal, executing the startup program; and entering operational system.

By means of conditionally simplifying startup steps, the method for operation system startup achieving an efficiency of decreasing a start time of the operation system.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 is a flow chart of a conventional computer operation system startup.

FIG. 2 is a flow chart of a method for operation system startup according to an embodiment of the present invention.

### DETAILED DESCRIPTION

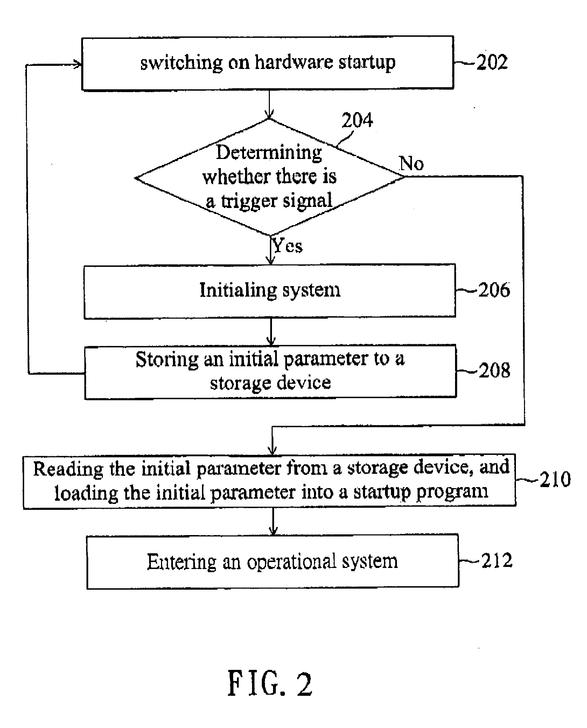

FIG. 2 is a flow chart of a method for operation system startup according to an embodiment of the present invention. Firstly starting from step 202, when a power supply Is input into a computer, all of chip groups, including CPU, south and north bridges, and peripheral chips, need to wait for operation under a proper voltage and timing sequence. After accomplishing hardware startup, step 204 is executed, system will determine whether there is a trigger signal. Because both of newly introduced and replacement of a peripheral hardware may be monitored by a control chip, the trigger signal sent by the control chip can determine whether there is a hardware change. Moreover, the user can artificial set the trigger signal. In this embodiment, when the hardware is changed, the system will execute step 206, initializing the system, at the first time of startup. The step 206 includes analyzing model number of CPU, size of memory and model number of hard disk, checking a peripheral display, a keyboard, and the hard disk or etc., and executing basic settings, or user entering into BIOS to execute settings. By means of initialization, system generates a new initial parameter. Then, in step 208, system will store the initial parameter to a storage device, such as a hard disk, a cache memory, a storage chip, or etc., restart and return back to step 202.

When startup at a second time, the system will detect the trigger signal as a basis of whether to execute initialization, In a normal state, when there is no hardware change, the peripheral chips would not send the trigger signal, or when there is no artificial set trigger signal, steps 210-212 will be executed, and system reads the pre-stored initial parameter from the storage device, loads the initial parameter into a startup program and then enters operational system. Hereafter, when there is no trigger signal being detected, after startup at the second time, the system is no need to execute the steps of initialization and storing the initial parameter, and directly loads the pre-stored initial parameter to the startup program to accomplish startup process of the computer.

The above description is given by way of example, and not limitation. Given the above disclosure, one skilled in the art could devise variations that are within the scope and spirit of the Invention disclosed herein, including configuration ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the Illustrated embodiments.

## Claims

1. A method for operation system startup, comprising the steps:
switching on hardware startup;
determining whether there is a trigger signal;
reading an initial parameter from a storage device, and loading the initial parameter into a startup program when there is no trigger signal, executing the startup program; and entering operational system.

2. The method as claimed in claim 1, further comprising the step of executing system initialization and generating the initial parameter when there is a trigger signal.

3. The method as claimed in claim 1, further comprising the step of storing the initial parameter to the storage device and restarting the hardware startup when there is a trigger signal.
